# EUROPEAN PATENT SPECIFICATION

(11) **EP 2 006 340 B1**
(45) Date of publication and mention of the grant of the patent: **16.02.2011**
(21) Application number: 08158463.3
(22) Date of filing: 18.06.2008
(51) Int. Cl.: C09J 7/02

(54) **Release liner having print receptive surface and methods for manufacturing and using**
Abziehschicht mit druckempfänglicher Oberfläche und Verfahren zur Herstellung und Verwendung
Inhibiteur à déclencheur disposant d'une surface réceptrice d'impression et procédés de fabrication et d'utilisation

(30) Priority: 20.06.2007 US 821079
(43) Date of publication of application: 24.12.2008
(73) Proprietor: Wausau Paper Mills, LLC., Mosinee WI 54455 (US)
(72) Inventor: Wozniak, John C., Rhinelander, WI 54501 (US); Engel, John, Rhinelander, WI 54501 (US); Morton, Dana R., Rhinelander, WI 54501 (US)
(74) Representative: Petri, Stellan

(56) References cited:
- EP-A- 0 330 850
- US-A1- 2004 137 242

## Description

### Field of the Invention

The present invention relates to a release liner having a print receptive surface, a method for manufacturing a release liner having a print receptive surface, and a method for using a release liner having a print receptive surface. The release liner can be provided having a first surface and a second surface, and differential release properties between the first surface and the second surface. The release liner can be provided as a silicone coated release liner.

### Background of the Invention

Release liners are often used in situations where it is desirable to deliver a material or substance for subsequent application. In general, the material or substance is applied to the release surface of the release liner, and the release liner is subsequently peeled away from the material or substance to allow the material or substance to be used. The release liner generally includes a substrate and a release surface. Exemplary substrates include paper, clay coated paper, polymer coated paper, polyethylene, polypropylene, polyethylene terephthalate, and vinyl. The release surface can be provided from a composition that, when applied to a substrate, provides release properties. A widely used class of release coatings includes those based on silicone such as polydimethylsiloxane polymers. Coatings based on polydimethylsiloxane chemistry are available as emulsions, as solvent solutions, and as solventless materials.

The addition of appropriate crosslinkers, release modifying agents, and catalysts to the polydimethylsiloxane polymer, followed by various curing techniques, creates a hard and durable coating from which other materials, such as adhesives, resin fiber coatings, and foams, are easily removed. A type of inhibitor is often used with polydimethylsiloxane to prevent the coating from curing too quickly, that is, before it can be applied to the substrate. Release modifiers can be used to change the ease with which materials are removed from the silicone coating.

Substrates from which other materials, such as adhesives, resin fiber mixtures, and foams, are easily removed are required in a wide variety of manufacturing processes. These processes include the production of labels and tapes as well as the manufacture of products used in the medical and graphic arts fields. Another application for these release liners is in the composites industry where products requiring both high strength and light weight are formed by impregnating fibers with resins on a release liner. The release liner is often a silicone coated release liner. The composites industry generally refers to carbon fiber composites. In general, carbon fiber composites have many diverse applications in the aerospace, space, and recreation industries. Exemplary areas utilizing articles prepared from carbon fiber composites include automotive (e.g., brake linings, drive shafts, springs, wheels, and structural components for racing cars), aircraft engines, recreation (e.g., fishing rods and reels, tennis rackets, racquetball rackets, golf club shafts, baseball bats, hockey sticks, oars, paddles, sailing masts, skis, and bicycles), electrical shielding and radar, absorption, medical (e.g., x-ray tables and prosthetic devices), and music applications (e.g., speaker cones and musical instrument components).

Manufacturing a carbon fiber composite material often requires assembling multiple layers of carbon fiber/resin lamina into larger components that are often hardened as a result of curing the resin. The number of layers of carbon fiber/resin can include hundreds or thousands. Furthermore, incorrectly assembling the carbon fiber/resin layers can result in a final product that is not acceptable. In the case of certain carbon fiber composite applications (e.g., turbine blades or aircrafts components), it is important to keep track of the number of carbon fiber/resin layers so that the resulting article is correctly manufactured.

Silicone coatings generally have a characteristically low surface energy that prevents many materials and mixtures from wetting the surface. It is the low surface energy of the silicone coatings that allow silicone release liners to function well as release liners. The low surface energy of the silicone coating, however, makes it difficult to print on a silicone coated surface. Furthermore, printing on a silicone coated surface generally has a tendency to smear as a result of rubbing or contact making the printing difficult to read once it is smeared. Furthermore, printing on a silicone coated surface may have a tendency to transfer to a material applied to the silicone coated surface.

### Summary of the Invention

A release liner having a print receptive surface is provided according to the present invention. The release liner includes a release liner substrate having a first surface and a second surface, and silicone coating provided on at least one of the release liner substrate first surface or second surface to provide a release surface. The silicone coating is provided in an amount sufficient to provide the release surface with release properties, and the silicone coating comprises sufficient print additive for enhancing the print receptiveness of the release surface while providing desired release properties.

A method for manufacturing a release liner having a print receptive surface is provided according to the present invention. The method includes a step of applying a silicone composition to a first or a second surface of a release liner substrate. The silicone composition comprises a sufficient amount of a print additive to enhance print receptiveness of a silicone coating formed as a result of drying or curing the silicone composition.

A method for using a release liner is provided according to the present invention. The method includes a step of applying a fiber and resin composition to a release liner surface comprising a silicone coating, wherein the silicon coating has printing thereon.

### Detailed Description

The release liner having a print receptive surface can be provided as a silicone release liner. In general, a silicone release liner includes a release liner substrate and a silicone coating provided on the release liner substrate. The silicone coating provides a release surface that allows a material or substance applied to the release surface to be removed from the release surface without damaging the material or substance. A print receptive surface means that the release surface of the release liner can receive a printing material such as ink without the printing material smearing or transferring to another substrate in contact with it. A difficulty in printing on a release surface is that the release properties of the release surface (e.g., low surface energy) makes printing on this release surface relatively difficult. That is, when printing on a surface, it is desirable to not only put down the printing material, but for the printing material to remain on the release liner and not to smear or transfer to another surface.

The phrase "silicone coating" refers to a coating provided on the release liner substrate that functions as a release surface. In general, the silicone coating can be characterized as a cured coating or a dried coating. The phrase "silicone composition" refers to a composition that can be applied to a release liner substrate to form a silicone coating once the silicone composition has cured, dried, or both cured and dried. The silicone composition can include water as a carrier, an organic solvent as a carrier, or can be characterized as solventless. Once the silicone composition has been applied as a coating and allowed to dry or cure, it can be characterized as a silicone coating. The silicone composition can be characterized as a polysiloxane composition. An exemplary polysiloxane composition includes polydimethylsiloxane. Exemplary silicone compositions are disclosed in U.S. Patent 4,618,657 to Katchko et al. The disclosure of U.S. Patent 4,618,657 is incorporated herein by reference.

Release liners are commonly used in the carbon fiber composite industry. The carbon fiber composite industry generally refers to carbon fiber composites as lightweight and having increased stiffness and strength. The term carbon fiber generally refers to a variety of filamentary products produced via the pyrolysis of polyacrylonitrile (PAN), pitch, or rayon. The filamentary products can contain up to about 90% carbon and can have a filament diameter of about 5-10 µm. It should be understood that this characterization of filamentary products is an exemplary characterization and does not limit what is meant by carbon fiber composites that can be used with the release liner according to the present invention. Furthermore, carbon fibers are often referred as graphite fibers. In addition to strength and stiffness, carbon fibers possess excellent fatigue strength, vibration damping characteristics, thermal resistance, and dimensional stability. Carbon fibers also have good electrical and thermal conductivity and chemical inertness. Carbon fiber composite materials are often found in many diverse applications in the aerospace, space, and recreation industries, and in industrial applications. Exemplary areas utilizing articles prepared from carbon fiber composites include automotive (e.g., brake linings, drive shafts, springs, wheels, and structural components for racing cars), aircraft engines, recreation (e.g., fishing rods and reels, tennis rackets, racquetball rackets, golf club shafts, baseball bats, hockey sticks, oars, paddles, sailing masts, skis, and bicycles), electrical shielding and radar, absorption, medical (e.g., x-ray tables and prosthetic devices), and music applications (e.g., speaker cones and musical instrument components). Exemplary industrial applications for carbon fiber composite materials include turbin blades used, for example, in power generation.

In general, when assembling a relatively complicated article using carbon fiber composite materials, the carbon fiber composite material is first applied to a release liner. Layers of the carbon fiber composite material can be removed from the release liners and used to form the article. In the case of certain complex articles (e.g., a turbine blade or an aircraft component), it may be necessary to combine layers of carbon fiber material from many (e.g., hundreds to thousands) release liners. Furthermore, the various layers of the carbon fiber composite compositions can be different, and it can be important to apply the layers of carbon fiber compositions in the appropriate order or orientation to achieve the resulting product. If the order or orientation of the lamina is not followed, the resulting product can be faulty and may need to be discarded. It is important to identify the various impregnated layers of carbon fiber composite composition on release liners after impregnation to identify the part for which they are intended and for lot traceability. One way to label the release liners is to print on the release liner. Providing printing on the release liner is one way to help organize the manner in which composite fiber articles are produced.

The release liner can be printed on prior to application of a material or substance to the release liner. In many applications, a release liner is desirable having release properties on both sides of the release liner. A substance or material applied to a release liner having release properties on both sides of the release liner can be wound into a roll. The material or substance can then be used as a result of unwinding the roll. In order to facilitate control of the material or substance on the release liner, the release liner can be provided having a differential release. A differential release means that one side of the release liner has more or less release properties than the other side of the release liner. Differential release allows the substance or material to be removed from the release liner in a uniform manner when the material or substance is in contact with both sides of the release liner. Because both sides of the release liner may be in contact with the material or substance applied to the release liner, it is desirable for the printing to remain on one of the sides of the release liner and resist transferring to the substance or material. Transferring of printing to the substance or material may adversely affect the substance or material. For example, in a situation where the substance or material is a fiber and resin composition (e.g. carbon fiber and resin), transfer of printing to the fiber and resin composition may adversely affect the bond strength or other properties, and may change the crosslink density

The print receptive properties of a release surface comprising a silicone coating can be adjusted by the addition of a print additive to the silicone composition prior to curing the silicone composition. The print additive can provide the release surface of the release liner with the ability to receive and hold ink as a result of printing while providing desired release. The printing can be applied to the release surface by conventional printing techniques including ink jet and laser printing techniques, and by hand.

One theory as to why the print additive of the silicone composition can enhance the print receptiveness of the resulting release surface is that the print additive can be a component that has a sufficiently large surface area so that ink particles adhere to the print additive. Another theory is that the print additive provides receptivity to ink, and holds the ink in place. Furthermore, the print additive can be provided as a material that mixes well with the silicone composition and avoids phase separation. The print additive can be selected so that it is compatible with the silicone composition. Exemplary print additives include silica, talc, precipitated calcium carbonate, starch, modified starch, starch/latex copolymers, and starch/latex mixtures.

The print receptiveness of a silicone release liner may be improved by the addition of a print additive to the silicone coating composition that is applied to the release liner substrate. The print additive can enhance the adhesion of ink particles to the release liner. The ink particles may be those involved in ink jet and other printing processes.

An exemplary print additive is silica. An exemplary form of silica is colloidal silica. Exemplary colloidal silica are available under the names Nalco 1050 Colloidal Silica, Nalco 7604LF Colloidal Silica, and Nalco Ultra Positek® 8691 Retention & Drainage Aid. These mixtures are manufactured by Nalco Company, 1601 W. Diehl Road, Naperville, Illinois. Nalco Ultra Positek® 8691 Retention & Drainage Aid has been found particularly effective in this regard. These types of colloidal silica are generally used in the paper making industries as a retention aid during a formation of a paper substrate.

In general, increasing the level or amount of silica in a silicone coating has a tendency to decrease release properties (e.g. increase the force needed to remove a material from the coating surface). The decrease in release properties can result in a release surface retaining a desired level of release properties as long as the decrease is not too much. Furthermore, the release properties can be compensated for by proper design of the silicone composition. In the case of a release liner having differential release properties between the two surfaces of the release liner, having one surface that has decreased release properties may be desirable. Accordingly, the incorporation of the print additive into a silicone composition can be provided to decrease the release properties in order to provide differential release while enhancing the printability of the release liner.

The silicone coating can contain a sufficient amount of the print additive to provide desired print legibility while also providing desired release properties. In general, the silicone coating can contain about 0.5 wt.% to about 20 wt.% print additive based on the weight of the silicone coating. Exemplary ranges of print additive in the silicone coating include about 0.8 wt.% to about 10 wt.%, and about 1 wt.% to about 6 wt.%.

### Release Liner Substrate

The release liner substrate can be selected so that it has properties that are desirable for a release liner. In general, a release liner should be sufficiently processable so that it can be processed through a print station or marking system for application of an ink or printing material thereto, and subsequently processed for receipt of a material or substance thereto for subsequent removal. If the substrate is too flimsy or too rigid, it may be difficult to handle.

Exemplary substrates that can be used as the release liner substrate include paper, clay coated paper, polymer coated paper, polyethylene, polypropylene, polyethylene terephthalate, and vinyl. Paper can be a preferred substrate because paper provides dimensional stability and a desired weight and texture for subsequent processing for printing and for subsequent application of a material or substance onto the release liner. In addition, a paper substrate can be prepared from renewable resources.

The paper substrate can be prepared from natural fiber, synthetic fiber, or a mixture of natural fiber and synthetic fiber. Natural fiber refers to fiber formed from plants or animals. Natural fibers are not fibers that are formed as a result of extrusion or spinning. The natural fibers can be obtained from a source of fiber using techniques such as chemical pulping, chemical mechanical pulping, semi chemical pulping, or mechanical pulping. Natural fibers from plants are often referred to as cellulosic fibers. Exemplary natural fibers that can be used to form the base sheet include wood fibers and non-wood natural fibers such as vegetable fibers, cotton, various straws (e.g., wheat and rye), various canes (e.g., bagasse and kenaf), silk, animal fiber, (e.g., wool), grasses (e.g., bamboo, etc.), hemp, corn stalks, abaca, eucalyptus, etc. Examples of synthetic fibers that could be used for the base sheet include polyacrylic fiber, polyethylene fiber, polypropylene fiber, polylactide fiber, rayon, and nylon fiber.

Wood fiber can be obtained from wood pulp, which can include hardwood fibers, softwood fibers, or a blend of hardwood fibers and softwood fibers. The pulp can be provided as cellulose fiber from chemical pulped wood, and can include a blend from coniferous and deciduous trees. By way of example, wood fibers can be from northern hardwood, northern softwood, southern hardwood, southern softwood, or any blend thereof. Hardwood fibers tend to be more brittle but are generally more cost effective for use because the yield of pulp from hardwood is higher than the yield of pulp from softwood. Softwood fibers have desired paper making characteristics but are generally more expensive than hardwood fibers.

The natural fibers can be extracted with various pulping techniques. For example, mechanical or high yield pulping can be used for stone ground wood, pressurized ground wood, refiner mechanical pulp, and thermomechanical pulp. Chemical pulping can be used incorporating kraft, sulfite, and soda processing. Semi-chemical and chemi-mechanical pulping can also be used which includes combinations of mechanical and chemical processes to produce chemithermomechanical pulp. Natural fibers can be bleached or unbleached.

The pulp can include a recycle source for reclaimed fiber. Exemplary recycle sources include post-consumer waste (PCW) fiber, office waste, and corrugated carton waste. Post-consumer waste fiber refers to fiber recovered from paper that is recycled after consumer use. Office waste refers to fiber obtained from office waste, and corrugated carton waste refers to fiber obtained from corrugated cartons. Additional sources of reclaimed fiber include newsprint and magazines. Reclaimed fiber can include both natural and synthetic fiber.

The refining of the fibers can be selected to enhance formation and fiber development. The level of fiber refining can be selected to help reduce penetration of the silicone composition into the paper substrate. In general, the silicone composition can be fairly expensive and it is desirable to reduce absorption of the silicone composition into the paper substrate. As a result, refining the fibers can help reduce penetration of the silicone composition into the paper substrate, and can help hold the silicone composition as a release layer on the paper substrate.

The paper substrate can be provided having a weight that enables the release liner to be processed through printing equipment and subsequent application of a material or substance thereto. For example, the paper substrate can be provided having a basis weight of about 20 lb/3,000 ft² to about 150 lb/3,000 ft². The paper substrate can be provided having a basis weight of about 25 lb/3,000 ft² to about 120 lb/3,000 ft², about 40 lb/3,000 ft² to about 80 lb/3,000 ft², or about 50 lb/3,000 ft² to about 70 lb/3,000 ft².

The porosity of the paper substrate can be controlled by surface treatment of the paper substrate to close up pores. Closing the pores of the paper substrate can be desirable to reduce the penetration of the silicone composition into the paper substrate. By reducing the penetration of the silicone composition into the paper substrate, it is possible to enhance or increase the amount of silicone composition remaining of the surface of the paper substrate and thereby use less silicone composition than if the silicone composition penetrates into the paper substrate. Exemplary surface treatments that can be used to help reduce penetration of the silicone composition into the paper substrate include machine calendaring and super calendaring. The finish on the paper substrate can be provided as a machine finish, a machine glazed finish, a clay coating. In addition, the paper substrate can be provided as a glassine sheet.

The silicone composition can be applied to the paper substrate "on machine" or "off machine." Application of the silicone composition on machine means that the silicone composition is applied to the paper substrate as the paper substrate is formed. The phrase "off machine" means that one the paper substrate is formed, it is transferred to another line where the silicone composition is applied to the paper substrate. The equipment used in a particular operation may vary from facility to facility, but it is expected that many of the general operations will be present. In addition, it should be understood that various additional steps, if desired, can be included in the process.

The silicone composition can be applied to a surface of the paper substrate "on machine" at a size press or other type of coater. Exemplary coaters include puddle coaters, film coaters, blade coaters, gate roll coaters, three roll coaters, etc. Furthermore, the silicone composition can be applied to both sides of the paper substrate.

The silicone composition can be applied to the paper substrate "off machine" using a metering rod coater, gravure coater, multi-roll coater, or other type of coater. Silicone coaters are generally known and can be used to apply the silicone composition. In general, the silicone coater puts down the silicone composition, and causes the silicone composition to dry and/or allows it to cure. The silicone coater can apply the silicone composition to a substrate in an operation separate from the manufacturer of the substrate itself.

The release liner substrate can pass through a coating station where the silicone composition is applied to the release liner substrate. The silicone composition can be applied to one or both sides of the release liner substrate. The surface of the release liner substrate that is processed to receive a silicone composition, and dried and cured, can be referred to as a release surface. A release surface containing a silicone coating and print additive can be printed upon.

The substrate to receive a silicone composition can be staged at an unwind station of a coater and passed through the coating station where the silicone composition is applied. Optionally, the substrate may be printed at a print station or surface treated at a corona station prior to going through the coating station. At the coating station the silicone composition may be applied at a desired coating weight determined by both substrate characteristics and end-use demands. For example, the silicone coating can be provided having a weight of about 0.2 lb/3,000 ft² to about 2.0 lb/3,000 ft². The silicone coating can be provided in an amount of about 0.4 lb/3,000 ft² to about 1.5 lb/3,000 ft², or about 0.5 lb/3,000 ft² to about 1.0 lb/3,000 ft².

Upon exiting the coating station the substrate passes through an oven section that may be made up of several dryer zones. Heat in the oven section drives off any volatile components in the silicone composition and cures the coating to create a hard and durable surface that is low in surface energy so that other materials such as adhesives, resin fiber coatings, and foams, can be easily removed from the surface in subsequent manufacturing operations.

To cool the cured silicone coating, and the liner substrate to which it has been applied, the substrate can then pass through one or more cooling stations. Optionally, moisture can be added to the silicone coated substrate through the use of jet steamers. The coated, cured, and cooled product is then wound up at a wind-up station and removed from the coating machine.

It may be desirable to provide the release liner with differential release properties. That is, one side of the release liner may have a different surface energy than the other side of the release liner. By providing a release liner with differential release properties, it is possible for the release liner to exhibit a release preference where one side of the release liner is more likely to release than the other side of the release liner. As a result, different silicone compositions can be applied to the opposite sides of the release liner substrate.

The following examples are given to illustrate the invention and are not intended to be limiting upon the scope of the invention.

### Example 1

Silica available under the names 7604LF Colloidal Silica and Ultra Positek® 8691 Retention & Drainage Aid were used as additives in a silicone emulsion in amounts of between 5% and 25%. These percentages are weight percentages based on the weight of the silicone composition (prior to drying and curing). The silicone was a polydimethylsiloxane. The silicone compositions were used to coat a clay-coated paper substrate so that the resulting dried and cured silicone coating weight was 0.6 or 1.0 lbs per 3,000 ft² of paper. The resulting release liner was then printed upon, and the legibility was then rated on a scale of A to F, with A being very legible and F indicating no improvement relative to a control containing no silica. The print legibility test involved allowing the printing to dry, and then rubbing the printing with a thumb. The level of release was tested by applying hot melt adhesive tape to the release liner with a 4.5 1b roller and then subjecting to a hydraulic press a 150°F and 1,000 1b pressure for 5 minutes. The tape was then pulled back in a direction of 180° and at 300 inches/minutes, and the peel force was measured. The hot melt adhesive tape has a width of 2 inches. The results are presented in Table 1.

In general, a release level of 20 grams/2-inch width corresponds to easy release. The release levels reported in Table 1 may be acceptable for many release liner applications. In general, increasing the amount of filler (silica) in the silicone composition has a tendency to decrease the release (meaning it takes more force to release from the release liner).

**Table 1**

| | **Print Legibility Rating** | **Release level** |
|---|---|---|
| **Sample** | **(A = best - F = no improvement)** | **(grams per 2-inch width)** |
| 5% 8691 at 0.6 lb/ream | F | 35 |
| 10% 8691 at 0.6 lb/ream | D | 41 |
| 15% 8691 at 0.6 lb/ream | C+ | 148 |
| 5% 8691 at 1.0 lb/ream | F | 23 |
| 15% 8691 at 1.0 lb/ream | C | 99 |
| 5% 7604 at 0.6 lb/ream | F | 27 |
| 10% 7604 at 0.6 lb/ream | D | 30 |
| 15% 7604 at 0.6 lb/ream | C- | 54 |
| 5% 7604 at 1.0 lb/ream | F | 22 |
| 15% 7604 at 1.0 lb/ream | D+ | 116 |
| Control at 0.6 lb/ream | F | 27 |
| Control at 1.0 lb/ream | F | 22 |

### Example 2

Silica available under the name Ultra Positek® 8691 Retention & Drainage Aid was used as an additive in a silicone emulsion in amounts of 10%, 15%, and 20%. These percentages are weight percentages based on the weight of the silicone composition. The formulations were then used to coat a clay-coated paper substrate so that the resulting dried and cured silicone coating composition weight was 0.6 or 1.0 lbs per 3000 ft² of paper. Legibility of printed paper was rated on a scale of A to F, with A being very legible and F indicating no improvement relative to a control containing no silica. Release level was also tested. Print legibility and release were determined as explained in Example 1. The results are presented in Table 2.

**Table 2**

| | **Print Legibility Rating** | **Release level** |
|---|---|---|
| **Sample** | **(A = best - F = no improvement)** | **(grams per 2-inch width)** |
| 10% 8691 at 1.0 lb/ream | D | 34 |
| 15% 8691 1 at .6 lb/ream | C | 40 |
| 15% 8691 at 1.0 lb/ream | C | 38 |
| 20% 8691 1 at .6 lb/ream | A | 94 |
| 20% 8691 at 1.0 lb/ream | A | 53 |
| Control Coating | F | |
| Control Coating | F | 70 |

### Example 3

Silica available under the name Ultra Positek® 8691 Retention & Drainage Aid was added to a silicone emulsion so that the Ultra Positek® 8691 made up 20% by weight based on the weight of the silicone composition. This formulation was then used to coat a clay-coated paper substrate so that the resulting dried and cured coating weight was 0.7 to 0.9 lb/3,000 ft² (specifically 0.69, 0.86, and 0.91). The release level of the coated paper increased somewhat, but legibility of the printed paper was greatly improved. The results are shown in Table 3.

**Table 3**

| | **Print Legibility Rating** | **Release level** |
|---|---|---|
| **Sample Coat Weight** | **(A = best - F = no improvement)** | **(grams per 2-inch width)** |
| 0.69 lb | C | 59 |
| 0.91 lb | B | 47 |
| 0.86 lb | B | 54 |
| Control Coating | F | 30 |

## Claims

1. A release liner having a print receptive surface comprising:
(a) a release liner substrate having a first surface and a second surface;
(b) a silicone coating provided on at least one of the release liner substrate first surface or second surface in amount sufficient to provide a release surface, the silicone coating comprising a sufficient amount of a print additive for enhancing print receptiveness of the release surface while providing desired release properties.

2. A release liner according to claim 1, wherein the print additive comprises at least one silica, precipitated calcium carbonate, talc, starch, modified starch, starch/latex copolymer, or starch/latex mixtures.

3. A release liner according to claim 1 or 2, wherein the release liner substrate comprises paper having a basis weight of about 20 lb/3,000 ft² to about 150 lb/3,000 ft².

4. A release liner according to any of the preceding claims, wherein the release surface comprises about 0.2 lb/3,000 ft² to about 2.0 lb/3,000 ft² of the silicone coating.

5. A release liner according to claim 4, wherein the release surface comprises about 0.4 lb/3,000 ft² to about 1.5 lb/3,000 ft² of the silicone coating.

6. A release liner according to any of the preceding claims, wherein the release liner substrate comprises a paper substrate coated with a clay coating composition.

7. A release liner according to any of the preceding claims, wherein the other of the first surface and second surface of the release liner substrate comprises a sufficient amount of a silicone coating to provide desired release properties.

8. A release liner according to any of the preceding claims, wherein the release liner comprises a first release surface and a second release surface, and the first release surface the second release surface have differential release properties.

9. A release liner according to any of the preceding claims, wherein the silicone coating comprises polydimethylsiloxane.

10. A release liner according to claim any of the preceding claims,
wherein the silicone coating comprises about 0.5 wt.% to about 20 wt.% of the print additive.

11. A method for manufacturing a release liner having a print receptive surface, the method comprising:
(a) applying a silicone composition to the first surface or the second surface of the release liner substrate, wherein the silicone composition comprises a sufficient amount of a print additive to enhance print receptiveness of the silicone coating formed as a result of drying and curing the silicone composition.

12. A method according to claim 11, further comprising:
(a) drying or curing the silicone composition.

13. Use of a release liner according to claim 1, wherein a fiber and resin composition is applied to the release liner surface comprising the silicone coating and having printing on the silicone coating.

14. Use according to claim 13, wherein the fiber and resin composition comprises carbon fiber and resin.

15. Use according to claim 13 or 14, wherein the fiber and resin composition is removed from the release liner and an article is formed.

## Patentansprüche

1. Trennschicht mit einer druckaufnahmefähigen Oberfläche, Folgendes aufweisend:
(a) ein Trennschichtsubstrat mit einer ersten Oberfläche und einer zweiten Oberfläche;
(b) eine Siliconbeschichtung, die auf der ersten und/oder zweiten Oberfläche des Trennschichtsubstrats in einer Menge vorgesehen ist, die ausreicht, um eine Ablösefläche bereitzustellen, wobei die Siliconbeschichtung eine ausreichende Menge eines Druckadditivs umfasst, um die Druckaufnahmefähigkeit der Ablösefläche zu verstärken und dabei gewünschte Ablöseeigenschaften bereitzustellen.

2. Trennschicht nach Anspruch 1, wobei das Druckadditiv mindestens ein/e Siliciumoxid, ausgefälltes Calciumcarbonat, Talkum, Stärke, modifizierte Stärke, Stärke/Latex-Copolymer oder Stärke/Latex-Gemische umfasst.

3. Trennschicht nach Anspruch 1 oder 2, wobei das Trennschichtsubstrat Papier mit einer Flächenmasse von ca. 20 Pfund/3.000 Fuß² bis ca. 150 Pfund/3.000 Fuß² umfasst.

4. Trennschicht nach einem der vorhergehenden Ansprüche, wobei die Ablösefläche ca. 0,2 Pfund/3.000 Fuß² bis ca. 2,0 Pfund/3.000 Fuß² der Siliconbeschichtung umfasst.

5. Trennschicht nach Anspruch 4, wobei die Ablösefläche ca. 0,4 Pfund/3.000 Fuß² bis ca. 1,5 Pfund/3.000 Fuß² der Siliconbeschichtung umfasst.

6. Trennschicht nach einem der vorhergehenden Ansprüche, wobei das Trennschichtsubstrat eine mit einer Tonbeschichtungszusammensetzung beschichtete Papierunterlage umfasst.

7. Trennschicht nach einem der vorhergehenden Ansprüche, wobei die jeweils andere der ersten und zweiten Oberfläche des Trennschichtsubstrats eine Menge einer Siliconbeschichtung umfasst, die ausreicht, um gewünschte Ablöseeigenschaften bereitzustellen.

8. Trennschicht nach einem der vorhergehenden Ansprüche, wobei die Trennschicht eine erste Ablösefläche und eine zweite Ablösefläche umfasst, und die erste Ablösefläche und die zweite Ablösefläche unterschiedliche Ablöseeigenschaften haben.

9. Trennschicht nach einem der vorhergehenden Ansprüche, wobei die Siliconbeschichtung Polydimethylsiloxan umfasst.

10. Trennschicht nach einem der vorhergehenden Ansprüche, wobei die Siliconbeschichtung ca. 0.5 Gew.-% bis ca. 20 Gew.-% des Druckadditivs umfasst.

11. Verfahren zur Herstellung einer Trennschicht mit einer druckaufnahmefähigen Oberfläche, wobei das Verfahren umfasst:
(a) Auftragen einer Siliconzusammensetzung auf die erste Oberfläche oder zweite Oberfläche des Trennschichtsubstrats, wobei die Siliconzusammensetzung eine ausreichende Menge eines Druckadditivs umfasst, um die Druckaufnahmefähigkeit der Siliconbeschichtung zu verstärken, die sich als Ergebnis eines Trocknens und Vernetzens der Siliconzusammensetzung gebildet hat.

12. Verfahren nach Anspruch 11, darüber hinaus umfassend:
(a) Trocknen oder Vernetzen der Siliconzusammensetzung.

13. Verwendung einer Trennschicht nach Anspruch 1, wobei eine Faser- und Harzzusammensetzung auf die Trennschichtoberfläche aufgetragen wird, die die Siliconbeschichtung und einen Aufdruck auf der Siliconbeschichtung umfasst.

14. Verwendung nach Anspruch 13, wobei die Faser- und Harzzusammensetzung Kohlenstofffasern und Harz umfasst.

15. Verwendung nach Anspruch 13 oder 14, wobei die Faser- und Harzzusammensetzung von der Trennschicht entfernt und ein Artikel gebildet wird.

## Revendications

1. Liner de séparation présentant une surface réceptrice d'impression comprenant :
(a) un substrat de liner de séparation présentant une première surface et une seconde surface ;
(b) un revêtement de silicone fourni sur au moins une de la première surface ou la seconde surface du substrat de liner de séparation dans une quantité suffisante pour fournir une surface de séparation, le revêtement de silicone comprenant une quantité suffisante d'un additif d'impression pour promouvoir l'aptitude à la réception d'impression de la surface de séparation tout en fournissant les propriétés de séparation souhaitées.

2. Liner de séparation selon la revendication 1, dans lequel l'additif d'impression comprend au moins un parmi la silice, le carbonate de calcium précipité, la stéatite, l'amidon, l'amidon modifié, un copolymère d'amidon/latex ou des mélanges d'amidon/latex.

3. Liner de séparation selon la revendication 1 ou 2, dans lequel le substrat du liner de séparation comprend un papier présentant un poids de base d'environ 20 livres/3 000 pieds² à environ 150 livres/3 000 pieds².

4. Liner de séparation selon l'une quelconque des revendications précédentes, dans lequel la surface de séparation comprend d'environ 0,2 livre/3 000 pieds² à environ 2,0 livres/3 000 pieds² du revêtement de silicone.

5. Liner de séparation selon la revendication 4, dans lequel la surface de séparation comprend d'environ 0,4 livre/3 000 pieds² à environ 1,5 livre/3 000 pieds² du revêtement de silicone.

6. Liner de séparation selon l'une quelconque des revendications précédentes, dans lequel le substrat du liner de séparation comprend un substrat de papier revêtu d'une composition de revêtement d'argile.

7. Liner de séparation selon l'une quelconque des revendications précédentes, dans lequel l'autre des première surface et seconde surface du substrat de liner de séparation comprend une quantité suffisante d'un revêtement de silicone pour fournir les propriétés de séparation souhaitées.

8. Liner de séparation selon l'une quelconque des revendications précédentes, dans lequel le liner de séparation comprend une première surface de séparation et une seconde surface de séparation et la première surface de séparation et la seconde surface de séparation présentent des propriétés de séparation différentes.

9. Liner de séparation selon l'une quelconque des revendications précédentes, dans lequel le revêtement de silicone comprend du polydiméthylsiloxane.

10. Liner de séparation selon l'une quelconque des revendications précédentes, dans lequel le revêtement de silicone comprend d'environ 0,5 % en masse à environ 20 % en masse de l'additif d'impression.

11. Procédé de fabrication d'un liner de séparation présentant une surface réceptrice d'impression, le procédé consistant :
(a) à appliquer une composition de silicone sur la première surface ou la seconde surface du substrat de liner de séparation, dans lequel la composition de silicone comprend une quantité suffisante d'un additif d'impression pour promouvoir l'aptitude à la réception d'impression du revêtement de silicone formé comme le résultat du séchage et du durcissement de la composition de silicone.

12. Procédé selon la revendication 11 consistant de plus :
(a) à sécher ou à faire durcir la composition de silicone.

13. Utilisation d'un liner de séparation selon la revendication 1, dans laquelle une composition de fibre et de résine est appliquée sur la surface du liner de séparation comprenant le revêtement de silicone et présentant une impression sur le revêtement de silicone.

14. Utilisation selon la revendication 13, dans laquelle la composition de fibre et de résine comprend une fibre de carbone et une résine.

15. Utilisation selon la revendication 13 ou 14, dans laquelle la composition de fibre et de résine est retirée du liner de séparation et un article est formé.
